# EUROPEAN PATENT APPLICATION

(11) **EP 2 100 857 A2**
(43) Date of publication of application: **16.09.2009**
(21) Application number: 09250670.8
(22) Date of filing: 10.03.2009
(51) Int. Cl.: C02F 11/18

(54) **Feedstock conversion process and apparatus**

(30) Priority: 10.03.2008 GB 0804408
(71) Applicant: MCH Systems Limited, Halesowen B62 9RM (GB)
(72) Inventor: de Salis, Clive Anthony Fane, Bridgend, Mid Glamorgan CF33 4RE (GB)
(74) Representative: Davies, Gregory Mark

(57) **Abstract**

A process and apparatus for converting a sewage containing feedstock into at least one useful product, wherein the process comprises the steps of:
a) adding a hydrocarbon containing solvent to the feedstock;
b) heating the solvent and feedstock under pressure to obtain the at least one useful product;

wherein the hydrocarbon comprises a gasoil.

## Description

The present invention relates to a method of converting a sewage containing feedstock into at least one useful product and an apparatus therefor.

US 3,733,255 discloses the conversion of municipal sewage sludge to heavy oil or bitumen by heating under pressure, in the absence of air, in the presence of carbon monoxide and water. The heating temperature ranges from about 250 degrees centigrade to 450 degrees centigrade whilst the pressure is about 1,000 p.s.i.g (69 Bar.g) to 7,000 p.s.i.g. (483 Bar.g).

FR2605015 discloses a process for converting waste into a product of increased calorific value by heating the waste with hydrogen donating aromatic hydrocarbon solvents. The process heats the waste and solvent at atmospheric pressure and 200-280 degrees centigrade and subsequently removes the insoluble components and the solvent. Preferred solvents are listed as tetralin, napthylene, methylnapthylene, creosote, anthracene, chrysene and their oils and mixtures.

The present invention seeks to provide an improved and safer process for the conversion of a sewage containing feedstock into at least one useful product

The term sewage is used to refer to waste matter from households and industry, in particular waste matter comprising faecal matter. The waste matter may be from human or animal sources. The waste matter is generally conveyed by sewers but may be held in receptacles such as cess pits, holding tanks or slurry tanks. One or more of vegetation, cellulose, plastics and fats and greases may be present in addition to faecal matter. In particular the term sewage refers to municipal sewage sludge obtained as an end product from municipal sewage works.

The present invention relates to a method as set out in claim 1.

Adding a hydrocarbon containing solvent to the feedstock results in an improved useful product yield. Some of the hydrocarbon containing solvent also acts as a reactant with the sewage in the feedstock and thus could be described as a solvent/reactant.

The process of the invention has one advantage that it requires significantly lower pressures to be applied in order to obtain at least one useful product. A further significant advantage is that the hydrogenation of the feedstock through the use of aromatic hydrocarbons as described for example in FR2605015 has associated difficulties and dangers as the transfer of free hydrogen ions as hydrogen in this state is extremely unstable and requires careful manipulation.

Furthermore the addition of a hydrocarbon containing solvent to the sewage containing feedstock reduces the abrasive properties of the feedstock and thus reduces wear and tear on the processing equipment.

In addition it has been discovered that the choice of solvent influences the useful product obtained. For example, if the useful product required is a gas oil grade hydrocarbon product (liquid hydrocarbon in the range C₆ to C₃₀) then a matching oil from the lighter half of the oil fraction (i.e. an oil containing hydrocarbon lighter than C₃₀) is preferably used as the hydrocarbon containing solvent.

As the composition of sewage used in the feedstock may vary, the solvent can be selected to best suit the feedstock.

The term useful product is used to refer to a commercially useful product and particularly a fuel product that can be burned to produce thermal energy. The useful product may comprise one or more hydrocarbon products and in particular one or more of the group comprising: fuel gas, liquid oil product and carbon solids. The term hydrocarbon product refers to compounds containing significant quantities of hydrogen and carbon (for example paraffins, alcohols, olefins, acetylenes, benzenes). The term fuel gas refers to a gas that can be burned to produce thermal energy and includes mixtures of one or more hydrocarbons such as methane, ethane, ethene, propene, propane, butane and butenes. The term liquid oil product refers to mixtures of hydrocarbons which preferably includes one or more of gas oil, diesel and fuel oil. The term carbon solid refers to a solid of more than 50% carbon.

The process of the invention may result in one or more useful products or a mixture thereof. Any useful product obtained may be subjected to known processing techniques to increases its commercial value, such as, for example, distillation or cracking.

It has also been discovered that the process of the invention has the advantage that the useful gas and liquid products obtained are substantially free of sulphur and metal-contaminants. The sulphur and metal-contaminants are found predominantly in the solid fraction. In particular the sulphur content of a hydrocarbon liquid product can be less than half that of the sulphur content of the fresh oil used as or in the hydrocarbon containing solvent.

A further advantage of the process of the invention is that the process gives favourable results even when the sewage containing feedstock is in the form of an aqueous sludge or slurry. The process of the invention thus removes the need for the sewage containing feedstock to be subjected to an initial thermal or chemical drying process to remove water. Furthermore during the reaction stage water present in the feedstock controls the pressure of the reaction vessel throughout the heating of the reactor. It has also been found that the process of the present invention produces water in addition to the water present in the feedstock. Thus, even if all water is removed from the feedstock before being subject to the process of the invention, water will be produced during the reaction which can be used to control the reactor pressure without needing to use mechanical or gas-injection means to control the pressure.

Preferably the solvent is added to the feedstock in the weight ratio of more than two parts hydrocarbon containing solvent to one part dried sewage mass (sewage mass is conventionally expressed in terms of dried solids whether or not it is present in a slurry or other form). More preferably the solvent is added to the feedstock in the weight ratio of four parts hydrocarbon containing solvent to one part dried sewage mass. It has been discovered that an increased weight ratio results in an improved useful product yield. The hydrocarbon containing solvent is preferably in excess throughout the process.

Preferably the solvent contains petroleum hydrocarbon grades and/or diesel. The term gasoil includes diesel which can be distilled from oil and may fall in the range C₆ to C₃₀. The term diesel is also not limited to petro-diesel and in particular includes bio-diesel. The solvent may include any gasoil hydrocarbon which comprises a plurality of carbon atoms in series connection forming an elongate chain, but is not limited to having solely long chains of carton atoms. Side branches may be present. Gasoil covers hydro-carbons in the range of about C₆ to C₃₀. The primary chain is formed such that the plurality of carbon atoms extend in a chain in which the carbon atoms do not form a loop. Such a ring or loop formation is applicable for an aromatic hydrocarbon. Instead, the carbon atoms form chains with each carbon atom in the series and connected to at least one other carbon atom. The end of the chain may comprise a variety of forms such as a plurality of hydrogen atoms or in the case of bio-diesel an alkyl-ester group may be present. Side chains of carbon atoms may extend from the primary chain of carbon atoms.

When the process is used with petro-diesel obtained via fractional distillation producing products having carbon chains of length approximately four to approximately eighty, it is envisaged that any fractions of the distillation process of crude petroleum may be utilised, however, the diesel components of the distilled crude petroleum or crude oil is the most suitable for use in the present invention. This is because the diesel in the range of C₉ to C₂₀ is the most stable at room temperature (lower chain carbons such as petrol have increased problems associated with evaporation and flammability at ambient temperatures). The higher length carbon chains such as those in the range of lubricating oil are most viscous and make the process according to the present invention more difficult. Diesel in the range of C₉ to C₂₀ is a desirable hydrocarbon length for the solvent for use in the process and a beneficial result is that a hydrocarbon product is produced having similar chain length. Diesel in this range is relatively non-flammable compared to shorter chain hydrocarbons whilst having a sufficiently low viscosity.

Diesel fuel is defined is ASTM D975-00 standard specification for diesel fuel oils as consisting mostly of hydrocarbons ranging from C₁₀ to C₂₄. Bio-diesel comprises a long chain of carbon chains, the chains ending with an ethyl ester. It will be appreciated that a bio-diesel blend may be utilised which comprises a blend of bio-diesel fuel with petroleum-based diesel fuel.

The hydrocarbon containing solvent preferably comprises one or more hydrocarbons that are liquid at ambient temperature and pressure.

Preferably a hydrocarbon product, particularly a liquid oil product, obtained by performing the process of the invention is recycled and used as at least a portion of the hydrocarbon component of the solvent. This improves the economical efficiency of the process. The liquid oil product may have undergone additional processing, before being used as the hydrocarbon component of the solvent.

The solvent may contain more than one of the specific solvent types mentioned above.

Preferably the solvent is substantially comprised of hydrocarbons or a mixture of hydrocarbons. Preferably the solvent is substantially comprised of one or more of the hydrocarbons referred to herein.

The heating step of the invention may be performed at a minimum 0.5 Bar.g pressure. Preferably the heating step is performed at between 0.5 Bar.g and 15 Bar.g. More preferably the heating step is performed at between 0.5 Bar.g and 5 Bar.g. More preferably the heating step is performed at between 0.5 Bar.g and 3.5 Bar.g. It has been discovered that the process of the invention can be performed successfully at significantly lower pressures than previously required. This improves the economic efficiency of the process.

Experimental results and exemplary embodiments of the present invention will now be described with reference to the following figures.
Figure 1 shows an experimental apparatus for carrying out the process of the invention.
Figure 2 shows the weight reduction of the "dry ash free" (DAF) solid material as a percentage of the initial dry sewage sample weight in various examples.
Figure 3 shows the percentage of carbon present in the initial sewage sample converted to gas, liquid or DCM soluble solid material in various examples.
Figure 4 shows a typical C₁-C₄ hydrocarbon gas distribution of gaseous products generated during the process of the invention and analysed by gas chromatography.
Figure 5 shows composition determined by gas chromatography - mass spectrometry of generated oil for an example with no water added and an example using 2ml tetralin solvent.
Figure 6 shows n-alkane distribution determined by gas chromatography - mass spectrometry of generated oil for an example with no water added and an example using 2ml tetralin solvent.
Figure 7 shows the basic stages of the industrial process.
Figure 8 shows a process flow diagram of the industrial process

### Experimental apparatus

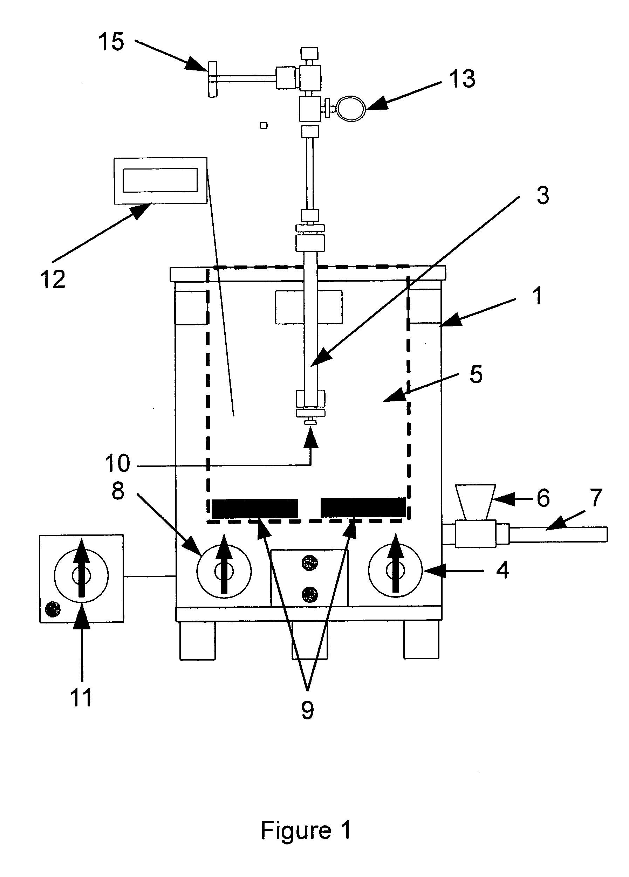

Referring to Figure 1, the apparatus 1 comprises a fluidised sand bath 5. Compressed air is supplied to the fluidised sand bath via supply pipe 7. Valve 6 controls the air supply. The fluidised sand bath is heated by plates 9. The temperature of the sand bath is controlled by temperature controller 11. The energy supplied to the apparatus is controlled by energy controller 8 whilst the heating plates are controlled by heating controller 4. The apparatus may further comprise a thermocouple for independent temperature display 12. The apparatus further comprises a reactor tube 3 positioned in the sand bath. The reactor tube 3 has two connections for connection to a control thermocouple 10 connected to a temperature display (not shown). The apparatus further comprises a pressure gauge 13 and a vent 15 for gas collection, connected to the reactor tube 3.

### Experimental results

The moisture, ash and elemental composition of the dried sewage sludge used for the anhydrous example set out below was first determined by thermo gravimetric analysis and elemental analysis. The determined composition in weight percent was as follows:
Ash (e.g. sand, grit) - 23 %
Water- 8.4%
Carbon - 37.2%
Nitrogen - 4.6%
Hydrogen - 5.3%
Other - 21.5%

Using the apparatus described above a baseline anhydrous or solvent-free conversion was obtained by placing 1.4 g dried sewage sample in the reactor tube 3. The sample tube 3 was pressurised with Nitrogen under 2 Bar.g pressure and the sample was heated in at a temperature of 400°C for 30 mins. The gaseous products of the reaction were collected via gas vent 15 and analysed for carbon dioxide and C₁-C₄ hydrocarbon gas contents by gas chromatography. On completion of the reaction the reactor tube 3 was washed out with dichloromethane (DCM). The residues were then reflux distilled using a soxhlet apparatus for 24 hours using toluene as the solvent to separate the liquid oil and solid residues. After reflux the contents of the flask are filtered through a 0.5µm glass fibre paper. The generated oils were then fractionated and the resultant hydrocarbon fractions analysed by gas chromatography-mass spectrometry. The "produced" water was measured using a Dean and Stark distilling trap apparatus. The "produced" water is water created during the chemical reaction which is in addition to the water present in the dried sewage sludge. The carbon content of the solid residues was measured by elemental analysis (EA).

The process as set out above was repeated with the dried sewage sample being present in the reactor tube along with one of the various solvents listed below:
1)0.7 ml water;
2) 0.7 ml water and 2ml Tetralin solvent;
3) 2ml Tetralin solvent;
4) 4ml Tetralin solvent;
5) 2g Phenanthrene;
6) 4ml diesel.

Aromatic hydrocarbons such as Tetralin are known to provide high yield by hydrogenation and experiments have been carried out for this compound for comparison purposes only. Water (i.e. no hydrocarbon containing solvent) has also been tested again for comparison.

The results of the experiments are set out in table 1 below:

**Table 1**

| | **Anhydrous** | **2 ml TET** | **2 ml 420'C** | **4 ml TET** | **Water** | **Water + TET** | **Phen** | **Diesel** |
|---|---|---|---|---|---|---|---|---|
| Starting Wt. (mg) | 1402.8 | 1398.9 | 1403.2 | 1402.9 | 1401.4 | 1399.6 | 1401.6 | 1400.1 |
| Ash content (%) | 23.1 | 23.1 | 23.1 | 23.1 | 23.1 | 23.1 | 23.1 | 23.1 |
| Ash content (mg) | 324.0 | 323.1 | 324.1 | 324.1 | 323.7 | 323.3 | 323.8 | 323.4 |
| Water content (%) | 8.4 | 8.4 | 8.4 | 8.4 | 8.4 | 8.4 | 8.4 | 8.4 |
| Water content (mg) | 117.8 | 117.5 | 117.9 | 117.8 | 117.7 | 117.6 | 117.7 | 117.6 |
| Starting Wt. AF (mg) | 1078.7 | 1075.7 | 1079.1 | 1078.8 | 1077.7 | 1076.3 | 1077.8 | 1076.7 |
| Starting Wt. DAF (mg) | 960.9 | 958.2 | 961.2 | 961.0 | 960.0 | 958.7 | 960.1 | 959.1 |
| | | | | | | | | |
| Solvent vol added (ml) | 0 | 2 | 2 | 4 | 0 | 2 | 2 | 4.0 |
| Water vol added (ml) | 0 | 0 | 0 | 0 | 0.7 | 0.7 | 0 | 0.0 |
| | | | | | | | | |
| Temperature ('C) | 400 | 400 | 420 | 400 | 400 | 400 | 400 | 400.0 |
| Time (min) | 30 | 30 | 30 | 30 | 30 | 30 | 30 | 30.0 |
| | | | | | | | | |
| Total gas volume (ml) | 125 | 111 | 116 | 90 | 120 | 110 | 118 | 83.0 |
| N2 volume (ml) | 39.5 | 35 | 36.5 | 24 | 36 | 34 | 34 | 26.0 |
| Generated gas (ml) | 85.5 | 76 | 79.5 | 66 | 84 | 76 | 84 | 57.0 |
| | | | | | | | | |
| Max pressure (bar) | 27 | 35 | 38 | 37 | 30 | 60 | 28 | 33.5 |
| Pressure at cool (bar) | 6 | 6 | 7 | 8 | 8 | 10 | 7 | 8.5 |
| | | | | | | | | |
| Oil yield (mg) | 308.1 | | | | 324.8 | | | |
| Residue wt. (mg) | 696.2 | 537.9 | 555.1 | 440.8 | 594.5 | 543.0 | 515.9 | 547.3 |
| Residue wt. AF (mg) | 372.1 | 214.8 | 230.9 | 116.7 | 270.8 | 219.7 | 192.1 | 223.8 |
| | | | | | | | | |
| Weight reduction (%) | 50.4 | 61.5 | 60.4 | 68.6 | 57.6 | 61.2 | 63.2 | 60.9 |
| **Weight reduction AF (%)** | **65.5** | **80.0** | **78.6** | **89.2** | **74.9** | **79.6** | **82.2** | **79.2** |
| | | | | | | | | |
| Total Ash (mg/g DAF) | 91.9 | 200.8 | | 192.1 | | | | |
| | | | | | | | | |
| Starting carbon (%) | 37.2 | 37.2 | 37.2 | 37.2 | 37.2 | 37.2 | 37.2 | |
| Starting carbon (mg) | 521.8 | 520.4 | 522.0 | 521.9 | 521.3 | 520.7 | 521.4 | |
| | | | | | | | | |
| Residual carbon % | 33.2 | 28.2 | 30.1 | 19.9 | 32.0 | 28.9 | 26.63 | |
| Residual carbon (mg) | 230.7 | 151.4 | 167.1 | 87.6 | 190.2 | 156.9 | 137.4 | |
| | | | | | | | | |
| Carbon converted (mg) | 291.2 | 368.3 | 354.9 | 434.3 | 331.1 | 363.8 | 384.0 | |
| **Carbon converted (%)** | **55.8** | **70.9** | **68.0** | **83.2** | **63.5** | **69.9** | **73.6** | |

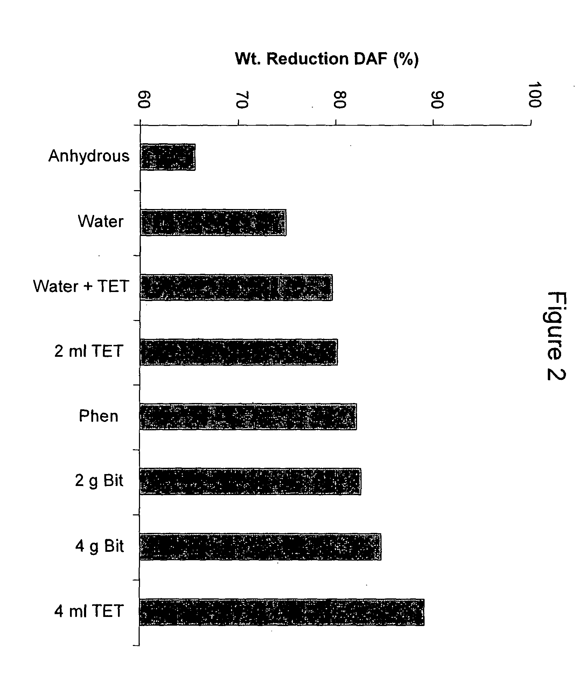

Figure 2 shows graphically the percentage weight reduction of the Dry Ash Free solid material (DAF: refers to the proportion of the sewage that is not ash and is thus theoretically capable of conversion to a useful product) remaining after the reactor tube 3 was washed out with DCM for several of the solvents. The DAF solid material remaining is thus 100% DCM insoluble. As can be seen from Table 1 and as shown in figure 2 the anhydrous run gave a conversion of 65.5% whilst the run using 2ml tetralin as a solvent increases this to 80%. As can also be seen the addition of water to the 2ml tetralin solvent does not have a significant negative effect on conversion. The use of a hydrocarbon containing solvent thus has the advantage that the sewage feedstock does not need to be dried. The highest conversion rate of approximately 89.2 % is obtained with 4ml tetralin solvent. 4ml diesel gives a conversion of 79.2% and 2 ml phenanthrene gives a conversion of 82.2%, showing a significant increase over the test carried out using water, thus having no hydrocarbon present.

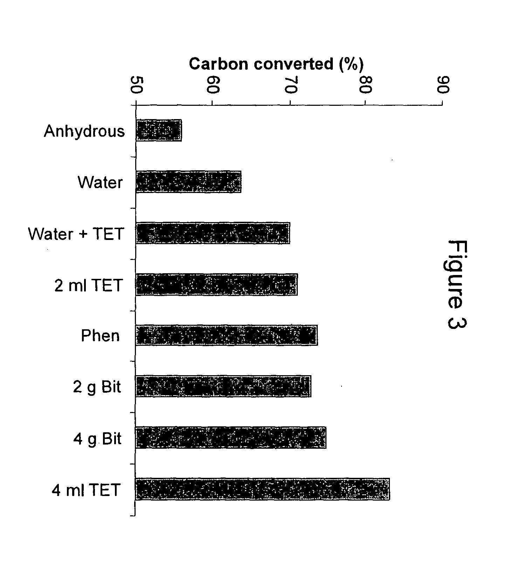

Figure 3 shows graphically the percentage of carbon present in the initial sewage sample which is converted to gas, liquid or DCM soluble solid material when subjected to the processing steps described above. Overall very similar trends to those present in figure 2 are present for the different solvents. However the carbon conversions are lower by approximately 10% than the calculations on a DAF basis as shown in figure 2. This is because carbon is concentrated in the DCM insoluble residue. The highest conversion rate of approximately 80% is again obtained using 4ml of tetralin solvent. The carbon conversion percentage for the 4ml diesel solvent has been calculated as 73%.

As shown in table 1 there was also a run performed using 2ml tetralin as the solvent and performed at 420°C.

It has been found that the remaining (DCM insoluble) residue is at least partially soluble in pyridine (C₅H₅N). The solubility of the unconverted carbon may be improved by heating the pyridine or using other hydrocarbon solvents at elevated temperatures.

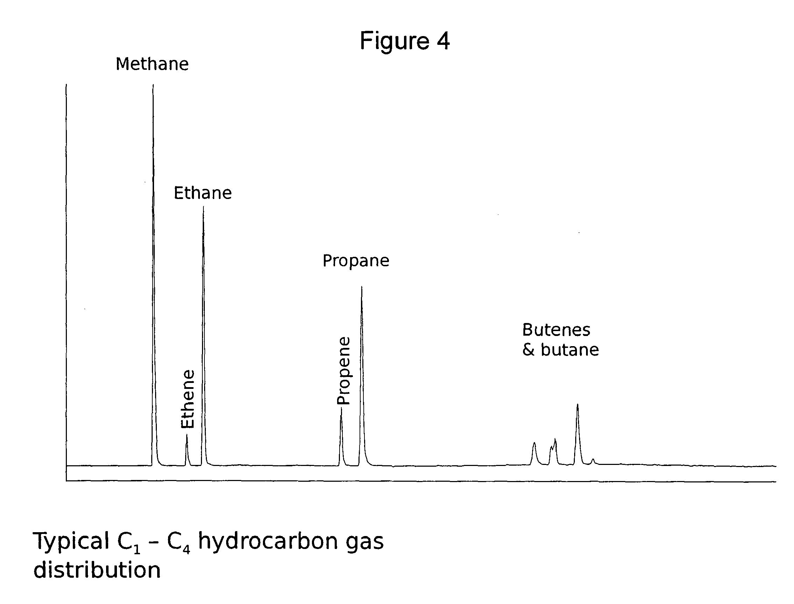

Figure 4 shows a typical C₁-C₄ hydrocarbon gas distribution of gaseous products generated which were analysed by gas chromatography. The chemical components of methane, ethane, ethene, propene, propane, butenes and butane were present for all solvents used.

The generated gas is dominated by CO₂ up to a maximum of approx 100mg/g DAF sludge for the solvent-free run. The total C1-C4 hydrocarbon gas yields are also highest for the solvent-free run at maximum of approximately 6.5mg/g DAF sludge.

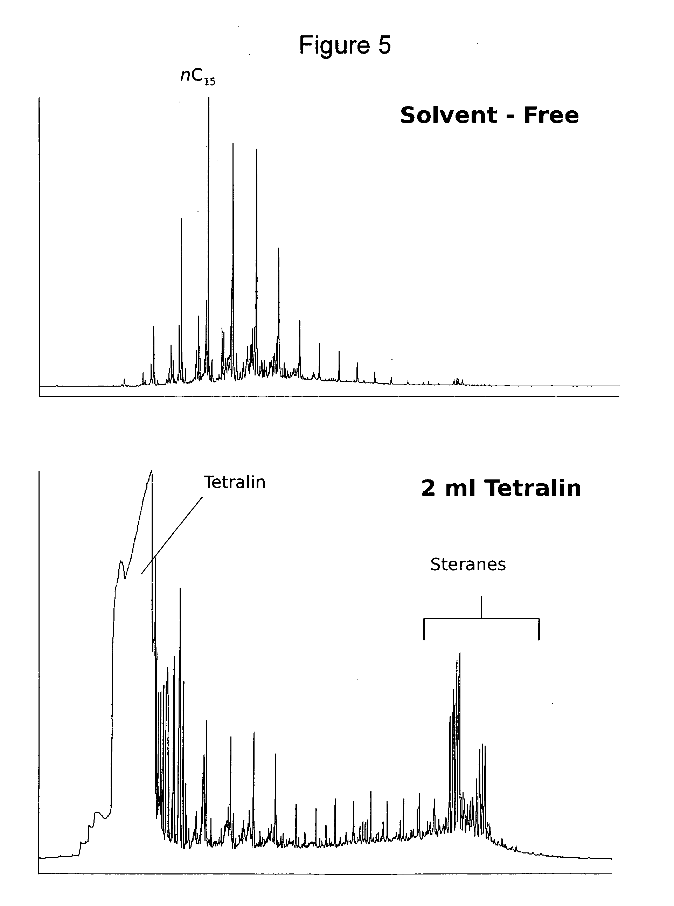

Figure 5 shows the composition of generated oil analysed by gas chromatography - mass spectrometry for the anhydrous or solvent-free run when no water was added and also for the example when 2ml tetralin solvent was added. As can be seen the addition of tetralin results in increased sterane presence in the generated oil in comparison with the solvent-free example.

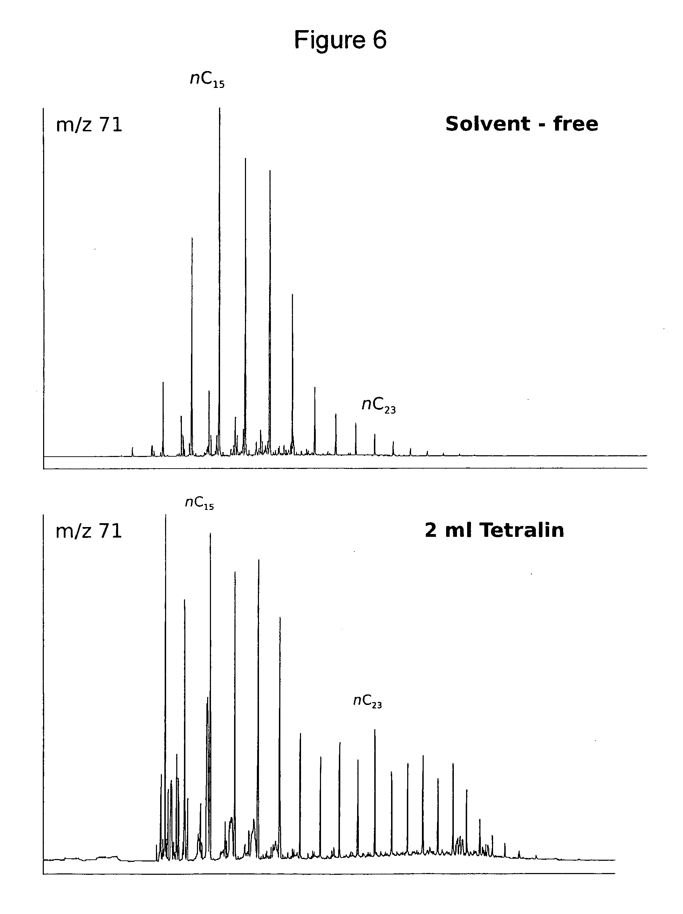

Figure 6 shows n-alkane distribution determined by gas chromatography - mass spectrometry of generated oil for an example with no water added and an example using 2ml tetralin solvent. As discussed above the addition of tetralin as a solvent results in a higher oil yield with overall DAF conversion increasing from approx 65% to approx 90% when 4ml tetralin is added. The amount of oil asphaltenes generated increases more than two-fold from approx 90 mg/g DAF sludge to approx 200 mg/g when tetralin is used.

When tetralin is added as a solvent the generated oils contain more longer chained n-alkanes, up to nC₃₅, and also more C₂₇-C₂₉ steranes/sterenes.

The process of the invention generally results in approximately one third gas product and one third liquid product with one third sewage remaining in the form of sand/ash.

### Process plant

The description of an exemplary process plant for performing the process of the invention is set out below.

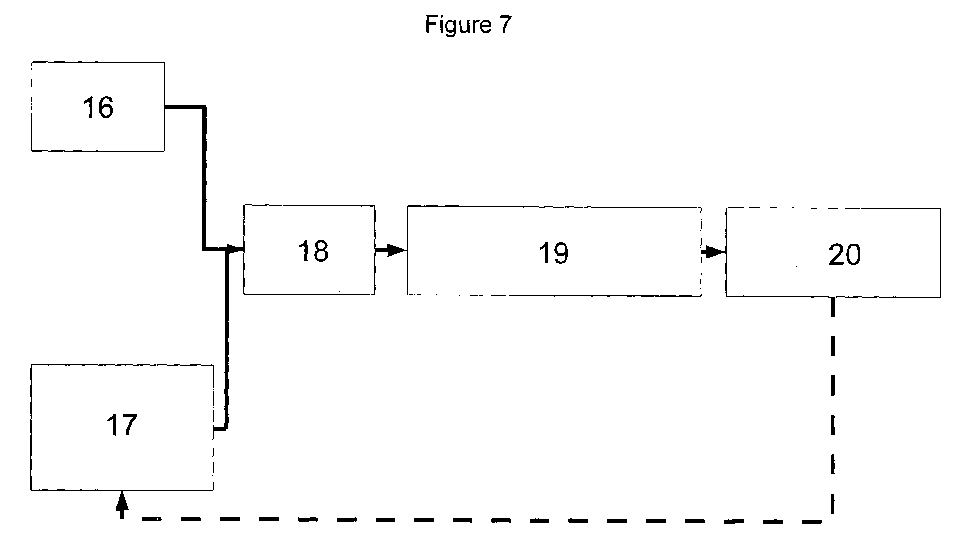

Figure 7 shows the basic stages of the process wherein sewage sludge 16 and hydrocarbon containing solvent/reactant 17 are mixed at 18 before being subjected to a reaction stage 19 in which the solvent and feedstock are heated under pressure to obtain at least one useful product. During the reaction stage the sewage is digested and reacted by the selected hydrocarbon containing solvent to produce an oil product. As previously mentioned, the selected hydrocarbon containing solvent influences the oil product obtained. After the reaction stage the products are subject to a separation step 20 and part of the product is recycled as the hydrocarbon containing solvent at 17.

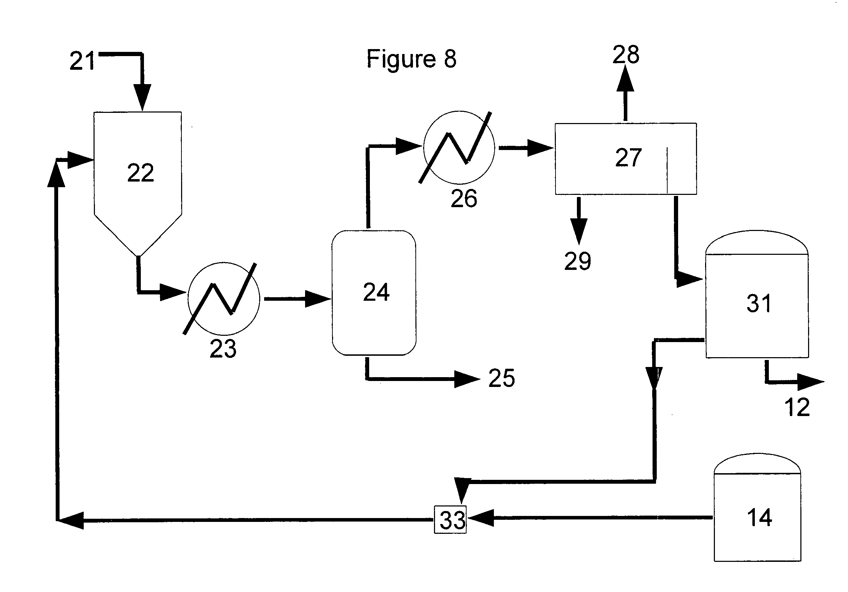

Figure 8 shows a process flow diagram of the industrial process. Sludge feed 21 feeds sewage sludge, that has already been screened to remove rags and large solids, to a mixer 22 where it is mixed with recycled liquid oil product previously obtained as a result of the process and "fresh" (to distinguish from liquid oil product obtained as a product of the process) oil. The recycled oil and fresh oil mixture is preferably preheated either before being introduced to the mixer 22 or preheated in the mixer 22 before the sewage sludge is introduced. The mixture is preferably in at least the weight proportion of 2:1 oil to dried sewage mass and more preferably in the proportion 4:1 of oil to dried sewage mass. The resulting mixture is heated by heating means 23 to drive off water to partially dry the mixture. Alternatively both the sewage sludge and oil can be pre-heated separately before mixing.

The liquid mixture is charged into a reactor vessel 24 and either flue gas (consisting mostly of nitrogen) generated by the heating means or the water vapour that is released from the liquid mixture during the initial heating of the reactor is used to remove the majority of the oxygen from the atmosphere above the liquid surface. The process thus has the advantage that commercially produced nitrogen or other inerting gas is not required thereby making the process more economical and efficient. Total removal of the oxygen in the atmosphere above the liquid does not occur as sewage retains some oxygen which is released during the process. The reactor vessel is heated to approx 350 degrees centigrade. The pressure of the vessel is maintained by controlling and adjusting the outflow of vapour leaving the reactor, to obtain the preferred pressure of between 0.5 and 10 Bar.g or by controlling and adjusting the inflow of flue gas to the pressure vessel in order to obtain the preferred pressure of between 0.5 and 10 Bar.g. The presence of the hydrocarbon chain lines up along side the waste and the organic component of the waste forms a similar hydrocarbon (as the length of the hydrocarbon used in the solvent produces a new hydrocarbon formed of the waste having a similar length hydrocarbon chain). Accordingly, a bio-diesel achieves the same benefits of the present invention as a gasoil such as a petro-diesel.

During the heating process gas produced by the mixture is cooled in condenser 26. The liquid oil product that condenses is separated from the water 29 and gas 28 in separator 27. The liquid oil product is transported to and stored in storage means 31. Some of the liquid oil product is recycled and mixed at mixer 33 with "fresh" oil from storage means 34 before being introduced to mixer 22.

Once the heating is completed the reaction product remaining in the reactor 24, comprising mainly a liquid heavy oil product and carbon solids, is removed at 25. The liquid heavy oil product can be filtered to separate it from the sand/ash component of the sewage sludge and/or can be used as a fuel to provide the energy for the process. The liquid heavy oil product is preferably filtered whilst still hot to make separation from the sand/ash easier.

The liquid oil product (including the heavy oil product) may be distilled using standard techniques in the oil industry to produce different fractions such as fuel gas, naptha, diesel, heavy distillate and heavy fuel oil.

The process may be performed in batches or the process may be performed in a continuous operation with the mixing step also taking place in the reactor vessel 24 and the sewage sludge feedstock and oil being charged directly to the reactor vessel.

Two or more embodiments as described and illustrated herein may be combined and the invention is intended to cover such combinations.

## Claims

1. A process for converting a sewage containing feedstock into at least one useful product, comprising the steps of:
a) adding a hydrocarbon containing solvent to the feedstock;
b) heating the solvent and feedstock under pressure to obtain the at least one useful product;
wherein the hydrocarbon comprises a gasoil.

2. The process according to any preceding claim, wherein in step a) the solvent is added to the feedstock in the weight ratio of equal to or greater than two parts solvent to one part dried sewage mass.

3. A process according to any preceding claim, wherein the solvent comprises one or more hydrocarbons that are liquid at ambient temperature and pressure.

4. A process according to any preceding claim wherein the gasoil comprises a diesel.

5. A process according to any preceding claim wherein the gasoil comprises a bio-diesel.

6. A process according to any of claims 1-5 wherein the gasoil has a carbon chain length between substantially six carbon atoms and thirty carbon atoms.

7. The process according to any preceding claim, wherein step b) is performed under at least 0.5 Bar.g pressure.

8. The process according to any preceding claim, wherein step b) is performed at a pressure of between 0.5 Bar.g and 10 Bar.g and more preferably at a pressure of between 5 Bar.g and 10 Bar.g.

9. The process according to any preceding claim, wherein step b) is performed at a temperature of between 280 to 440 degrees centigrade.

10. A process according to any preceding claim wherein the at least one useful product comprises a mixture of hydrocarbons.

11. A process according to claim 10 wherein said mixture of hydrocarbons comprises a fuel gas and an oil product.

12. The process according to claim 11, wherein in step a) the hydrocarbon containing solvent contains oil product obtained from step b).

13. Apparatus for performing the process of any preceding claim comprising:
means for mixing the sewage containing feedstock and hydrocarbon containing solvent; a pressure vessel for holding the resultant mixture under pressure;
means for heating the resultant mixture in the pressure vessel; and gas recovery means for recovering gas from the pressure vessel.

14. Apparatus according to claim 13 further comprising:
condensing means for cooling the gas recovered from the pressure vessel; and separator means for separating the cooled gas into water, liquid oil product and gas; and optionally further comprising:
means for transporting a liquid oil product from the reactor vessel and/or the separator means to the means for mixing.

15. Apparatus according to any of claims 13 to 14, comprising means to control the outflow of gas from the pressure vessel; and optionally comprising a conduit connecting a flue of the heating means to the pressure vessel so that flue gas can be introduced into the pressure vessel.
